# EUROPEAN PATENT APPLICATION

(11) **EP 4 819 741 A1**
(43) Date of publication of application: **07.10.2026**
(21) Application number: 25738549.2
(22) Date of filing: 10.01.2025
(51) Int. Cl.: H04W 72/232

(54) **DATA TRANSMISSION METHOD, DEVICE, AND COMPUTER-READABLE STORAGE MEDIUM**

(30) Priority: 12.01.2024 CN 202410053525
(71) Applicant: Honor Device Co., Ltd., Shenzhen, Guangdong 518040 (CN)
(72) Inventor: ZHANG, Mingzhu, Shenzhen, Guangdong 518040 (CN)
(74) Representative: Isarpatent
(86) International application number: PCT/CN2025/071701
(87) International publication number: WO 2025/149022

(57) **Abstract**

Embodiments of this application provide a data transmission method, a device, and a computer-readable storage medium, and relate to the field of wireless communication technologies. The method includes: A network device sends first configuration information to a terminal device, where the first configuration information includes information related to a first condition; and the terminal device determines whether the first condition is met; and when the first condition is met, the terminal device transmits first data or offsets a measurement time. In the foregoing solution, a transmission time of the first data overlaps with the measurement time, the terminal device can transmit the first data in a timely manner without waiting for the measurement time to elapse.

## Description

This application claims priority to Chinese Patent Application No. 202410053525.5, filed with the China National Intellectual Property Administration on January 12, 2024 and entitled "DATA TRANSMISSION METHOD, DEVICE, AND COMPUTER-READABLE STORAGE MEDIUM", which is incorporated herein by reference in its entirety.

### TECHNICAL FIELD

This application relates to the field of wireless communication technologies, and in particular, to a data transmission method, a device, and a computer-readable storage medium.

### BACKGROUND

In a wireless communication system, a terminal device in a connected state performs measurement based on a measurement configuration indicated by a network device. For example, when a measurement gap (measurement gap, MG) configured in the measurement configuration occurs, the terminal device stops data reception/transmission and immediately performs measurement.

For some data services, a time at which the terminal device receives or transmits data is likely to overlap with measurement time, indicating that at specific times, the terminal device may be required to perform measurement while receiving or transmitting the data.

In a current processing manner, when the time at which the terminal device receives or transmits the data overlaps with the measurement time, the terminal device receives or transmits the data after the measurement time elapses.

### SUMMARY

Embodiments of this application provide a data transmission method, a device, and a computer-readable storage medium, which are applied to the field of wireless communication technologies. A terminal device can transmit data in a timely manner without waiting for a measurement time to elapse.

According to a first aspect, an embodiment of this application provides a data transmission method. The method includes:
sending first configuration information to a terminal device, where the first configuration information includes information related to a first condition, and/or the first configuration information includes indication information;
the first condition is related to any one or more of a data type of first data, a transmission object corresponding to the first data, and a first state; and the first state is related to a link state and/or a mobility state of the terminal device; and
the indication information indicates one or more of a data type, a transmission object, or a first state to which a measurement time offset is applicable or for which data transmission is performable within the measurement time.

In a possible embodiment, the indication information includes first information, and the first information indicates the transmission object to which the measurement time offset is applicable.

In a possible embodiment, the transmission object includes any one of a transmission channel, a data set, a data bearer, a data stream, and a transmission resource; the transmission channel includes a logical channel or a logical channel group; and the transmission resource includes an uplink resource or a downlink resource.

In a possible embodiment, the first information includes a bitmap; and the bitmap includes at least one bit, and each bit is mapped to a different transmission object; and when a value of the bit is a first value, it indicates that the measurement time offset is applicable to a corresponding transmission object; and when the value of the bit is a second value, it indicates that the measurement time offset is not applicable to the corresponding transmission object; and
the first information includes an identifier of the transmission object to which the measurement time offset is applicable; or
the first information is carried in configuration information corresponding to the transmission object.

In a possible embodiment, the transmission object includes the transmission resource, and the first information is carried in resource configuration information corresponding to the transmission resource; and
the first information includes a first field; and when the first field is a first preset value, it indicates that the measurement time offset is applicable to the transmission resource; and when the first field is a second preset value or is empty, it indicates that the measurement time offset is not applicable to the transmission resource.

In a possible embodiment, the first information further indicates an offset duration of the measurement time offset; or
the method further includes:
sending second information to the terminal device, where the second information includes the offset duration of the measurement time offset.

In a possible embodiment, the method further includes:
receiving third information from the terminal device, where the third information indicates a start time at which a first measurement time is offset; and
offsetting the start time of the first measurement time based on the offset duration.

In a possible embodiment, the method further includes:
receiving fourth information from the terminal device, where the fourth information includes an offset duration of a first measurement time; and
offsetting a start time of the first measurement time based on the offset duration.

In a possible embodiment, the data type of the first data includes any one of retransmission data, initial transmission data, and delay-sensitive data; and
the indication information includes first indication information, and the first indication information indicates the data type to which the measurement time offset is applicable, or the data type for which data transmission is performable within the measurement time.

In a possible embodiment, the first indication information includes a bitmap, the bitmap includes a plurality of bits, and each bit is mapped to a different data type; and when a value of a bit is a first value, it indicates that the measurement time offset is applicable to a corresponding data type or that data transmission is performable within the measurement time; and when the value of the bit is a second value, it indicates that the measurement time offset is not applicable to the corresponding data type or that data transmission is not performable within the measurement time; or
the first indication information includes an identifier of the data type to which the measurement time offset is applicable or for which data transmission is performable within the measurement time.

In a possible embodiment, the indication information includes second indication information, and the second indication information indicates the transmission object for which data transmission is performable within the measurement time.

In a possible embodiment, the second indication information includes a bitmap, and each bit in the bitmap is mapped to a different transmission object; and when a value of a bit is a first value, it indicates that a corresponding transmission object can perform data transmission within the measurement time; and when the value of the bit is a second value, it indicates that the corresponding transmission object can not perform data transmission within the measurement time;
the second indication information includes an identifier of the transmission object for which data transmission is performable within the measurement time; or
the second indication information is carried in configuration information of the transmission object; the second indication information includes a second field; and when the second field is a first preset value, it indicates that the transmission object may perform data transmission within the measurement time; and when the second field is a second preset value or is empty, it indicates that the transmission object may not perform data transmission within the measurement time.

In a possible embodiment, the indication information includes third indication information, and the third indication information indicates the first state to which the measurement time offset is applicable or for which data transmission is performable within the measurement time; and the first state includes at least one of the following: mobility of the terminal device, a congestion status, and the link state.

In a possible embodiment, the first state needs to meet a third condition; and the third condition includes at least one of the following: a mobility speed of the terminal device is less than a preset speed threshold, the terminal device is in a static state, the terminal device is not in a cell-edge state, the congestion status is congestion, link quality is less than a first quality threshold, link quality is greater than a first quality threshold or less than a second quality threshold, or link quality is greater than a second quality threshold.

In a possible embodiment, the indication information includes fourth indication information, and the fourth indication information is used to determine whether to perform a measurement time offset or data transmission within the measurement time based on any one or more of first indication information, the first information, second indication information, and third indication information.

In a possible embodiment, the measurement time includes a measurement time window of a measurement gap or a synchronization signal/physical broadcast channel block measurement timing configuration window.

According to a second aspect, an embodiment of this application provides a data transmission method. The method includes:
determining whether a first condition is met; and
when the first condition is met, transmitting the first data, or offsetting a measurement time.

In a possible embodiment, the transmission object includes any one of a transmission channel, a data set, a data bearer, a data stream, and a transmission resource; the transmission channel includes a logical channel or a logical channel group; and the transmission resource includes an uplink resource or a downlink resource.

In a possible embodiment, the method further includes:
receiving first configuration information from a network device, where the first configuration information includes information related to the first condition; and the first condition is related to any one or more of a data type of the first data, a transmission object corresponding to the first data, and a first state; and the first state is related to a link state and/or a mobility state of a terminal device.

In a possible embodiment, the first configuration information includes indication information, and the indication information indicates one or more of a data type, a transmission object, or a first state to which the measurement time offset is applicable or for which data transmission is performable within the measurement time.

In a possible embodiment, the indication information includes first information, and the first information indicates the transmission object to which the measurement time offset is applicable.

In a possible embodiment, the indication information includes first indication information, and the first indication information indicates the data type to which the measurement time offset is applicable, or the data type for which data transmission is performable within the measurement time.

In a possible embodiment, the indication information includes second indication information, and the second indication information indicates the transmission object for which data transmission is performable within the measurement time.

In a possible embodiment, the indication information includes third indication information, and the third indication information indicates the first state to which the measurement time offset is applicable or for which data transmission is performable within the measurement time; and a third condition that the first state needs to meet.

In a possible embodiment, the indication information includes fourth indication information, and the fourth indication information is used to determine whether to perform the measurement time offset or data transmission within the measurement time based on any one or more of first indication information, first information, second indication information, and third indication information.

In a possible embodiment, the determining whether the first condition is met includes:
when the first data exists and a transmission time of the first data overlaps with the measurement time, determining whether the first condition is met.

In a possible embodiment, the first condition includes:
the first data includes one or more of a specific type of data, the first data corresponds to a transmission object that satisfies a second condition, or the first state meets the third condition.

In a possible embodiment, the specific type of data includes any one of retransmission data, initial transmission data, and delay-sensitive data.

In a possible embodiment, the second condition is that the transmission object to which the measurement time offset is applicable or the transmission object for which data transmission is performable within the measurement time is included.

In a possible embodiment, the first state includes at least one of the following: mobility of the terminal device, a congestion status, and the link state.

In a possible embodiment, the third condition includes at least one of the following: a mobility speed of the terminal device is less than a preset speed threshold, the terminal device is in a static state, the terminal device is not in a cell-edge state, the congestion status is congestion, link quality is less than a first quality threshold, link quality is greater than a first quality threshold or less than a second quality threshold, or link quality is greater than a second quality threshold.

In a possible embodiment, the method further includes:
receiving second information from a network device, where the second information includes an offset duration of the measurement time.

In a possible embodiment, the method further includes:
sending third information to the network device, where the third information indicates the network device to offset a start time of the measurement time based on the offset duration.

In a possible embodiment, the method further includes:
sending fourth information to a network device, where the fourth information includes the offset duration of the measurement time, and the fourth information indicates the network device to offset a start time of the measurement time based on the offset duration.

In a possible embodiment, the first data includes extended reality XR service data.

In a possible embodiment, a type of the indication information includes a holding type and a release type;
when the type of the indication information is the holding type and the indication information is not reconfigured in a reconfiguration process, the indication information remains valid; and
when the type of the indication information is the release type and the indication information is not reconfigured in the reconfiguration process, the indication information is released.

According to a third aspect, an embodiment of this application provides a network device. The network device includes a processor and a memory, where the memory stores code instructions; and the processor executes the code instructions stored in the memory, to perform the method described in any one of the first aspect or the possible embodiments of the first aspect.

According to a fourth aspect, an embodiment of this application provides a terminal device. The terminal device includes a processor and a memory, where the memory stores code instructions; and the processor executes the code instructions stored in the memory, to perform the method described in any one of the second aspect or the possible embodiments of the second aspect.

According to a fifth aspect, an embodiment of this application provides a computer-readable storage medium. The computer-readable storage medium stores a computer program or instructions; and when the computer program or the instructions are run on a computer, the computer is enabled to perform the method described in any one of the first aspect or the possible embodiments of the first aspect.

Alternatively, when the computer program or the instructions are run on a computer, the computer is enabled to perform the method described in any one of the second aspect or the possible embodiments of the second aspect.

According to a sixth aspect, an embodiment of this application provides a computer program product including a computer program. When the computer program is run on a computer, the computer is enabled to perform the method described in any one of the first aspect or the possible embodiments of the first aspect.

Alternatively, when the computer program is run on a computer, the computer is enabled to perform the method described in any one of the second aspect or the possible embodiments of the second aspect.

According to a seventh aspect, this application provides a chip or a chip system. The chip or the chip system includes at least one processor and a communication interface. The communication interface and the at least one processor are interconnected through a line. The at least one processor is configured to run a computer program or instructions to perform the method described in any one of the first aspect or the possible embodiments of the first aspect. Alternatively, the at least one processor is configured to run a computer program or instructions to perform the method described in any one of the second aspect or the possible embodiments of the second aspect. The communication interface in the chip may be an input/output interface, a pin, a circuit, or the like.

In a possible implementation, the chip or chip system further includes at least one memory, and the at least one memory has instructions stored therein. The memory may be a storage unit, for example, a register or a cache, inside the chip, or may be a storage unit (for example, a read-only memory or a random-access memory) of the chip.

Embodiments of this application provide a data transmission method, a device, and a computer-readable storage medium. The method includes: When a terminal device has to-be-transmitted first data and a transmission time of the first data overlaps with a measurement time, the terminal device may choose to transmit the first data within the measurement time, or may choose to transmit the first data at a time at which a start time of the measurement time is offset. Therefore, the terminal device can transmit the first data in a timely manner without waiting for the measurement time to elapse.

### BRIEF DESCRIPTION OF DRAWINGS

FIG. 1 is a diagram of an architecture of a communication system according to an embodiment of this application;
FIG. 2 is a diagram 1 of data transmission according to an embodiment of this application;
FIG. 3 is a diagram of data transmission performed by offsetting a measurement time according to an embodiment of this application;
FIG. 4 is a diagram 1 of data transmission within a measurement time according to an embodiment of this application;
FIG. 5 is a diagram 2 of data transmission within a measurement time according to an embodiment of this application;
FIG. 6 is a schematic flowchart 1 of steps of a data transmission method according to an embodiment of this application;
FIG. 7 is a schematic flowchart of a data transmission mechanism according to an embodiment of this application;
FIG. 8 is a schematic flowchart 2 of steps of a data transmission method according to an embodiment of this application;
FIG. 9 is a schematic flowchart 3 of steps of a data transmission method according to an embodiment of this application; and
FIG. 10 is a diagram of a hardware structure of an electronic device according to an embodiment of this application.

### DESCRIPTION OF EMBODIMENTS

To facilitate a clear description of the technical solutions in embodiments of this application, the words such as "example" or "for example" in embodiments of this application are used to indicate an example, an illustration, or a description. Any embodiment or design solution described as "example" or "for example" in this application should not be construed as being preferred or advantageous over other embodiments or design solutions. More exactly, the use of words such as "example" or "for example" is intended to present concepts in a specific manner.

In embodiments of this application, words such as "first" and "second" are used to distinguish between same items or similar items with basically the same functions and effects. For example, first indication information and second indication information are merely used to distinguish different pieces of indication information, but not used to limit a sequence thereof. A person skilled in the art may understand that the terms such as "first" and "second" do not limit a quantity or an execution sequence, and the terms such as "first" and "second" do not indicate a definite difference.

It should be noted that words such as "example" or "for example" in embodiments of this application are used to represent giving an example, an illustration, or a description. Any embodiment or design solution described as "example" or "for example" in this application should not be construed as being preferred or advantageous over other embodiments or design solutions. More exactly, the use of words such as "example" or "for example" is intended to present concepts in a specific manner.

In this embodiment of this application, "at least one" refers to one or more, and "a plurality of" refers to two or more. "And/or" describes an association relationship between associated objects, and indicates that three relationships may exist. For example, A and/or B may represent the following cases: Only A exists, both A and B exist, and only B exists. A and B each may be singular or plural. The character "/" generally indicates an "or" relationship between the associated objects. "At least one item of the following" or a similar expression thereof refers to any combination of these items, including one item or any combination of a plurality of items. For example, at least one of a, b, or c may represent a, b, c, a and b, a and c, b and c, or a, b, and c, where a, b, and c may be singular or plural.

To clearly describe the technical solutions in embodiments of this application, the following briefly describes some terms and technologies related to embodiments of this application.
1. Measurement gaps (measurement gaps, MG): Typically, a terminal device includes only one receiver and can receive a signal on only one frequency point at a same time, and thus can not simultaneously perform data transmission/reception and mobility measurement. Therefore, the MG is a time interval for measurement specifically configured by a network device for the terminal device. When the terminal device leaves a current frequency point to perform measurement on another frequency point, because the network device is configured not to require the terminal device to transmit and receive data, the terminal device can focus on measurement, without a need to transmit and receive the data. Essentially, the MG is a mechanism that implements data transmission/reception and mobility measurement in a time-division manner.
2. Synchronization signal/physical broadcast channel block measurement timing configuration (SS/PBCH block measurement timing configuration, SMTC): is a window configured by a network device for a terminal device to perform measurement based on a synchronization signal/physical broadcast channel block (synchronization signal and PBCH block, SSB). The terminal device needs to perform SSB measurement only within the SMTC measurement window, and does not need to perform SSB measurement outside the SMTC measurement window.
3. Extednded reality (extednded reality, XR) service: is a service field that integrates a virtual reality (virtual reality, VR) technology, an augmented reality (augmented reality, AR) technology, and a mixed reality (mixed reality, MR) technology. The XR technology can provide immersive experience, enable users to interact with digital content, and create completely new user experience by adding virtual elements to the real world.
4. Radio resource management (radio resource management, RRM): aims to provide high-quality service assurance for a terminal device under a limited bandwidth condition. Based on radio resource measurements performed (reported) by the terminal device, RRM enables the network device to flexibly allocate and dynamically adjust radio (transmission) resources to the terminal device, to maximize utilization of a radio spectrum, prevent network congestion, and keep a signaling load as low as possible. The RRM measurement mainly measures a reference signal received power (reference signal received power, RSRP) value and a reference signal receiving quality (reference signal receiving quality, RSRQ) value of a serving cell and neighboring cells.
5. Terminal device:

The terminal device in embodiments of this application may include a handheld device, a vehicle-mounted device, and the like that have a wireless communication function. For example, some terminal devices are a mobile phone (mobile phone), a tablet computer, a palmtop computer, a laptop computer, a mobile internet device (mobile internet device, MID), a wearable device, a VR device, an AR device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in a 5G network, a terminal device in future evolved public land mobile communication network (public land mobile network, PLMN), or the like. This is not limited in embodiments of this application.

By way of example and not limitation, in embodiments of this application, the terminal device may also be a wearable device. The wearable device may also be referred to as a wearable smart device, and is a generic term for wearable devices such as glasses, gloves, watches, clothing, and shoes that are intelligently designed and developed for daily wear by using wearable technologies. The wearable device is a portable device that is worn directly on a body or integrated into clothing or accessories of a user. The wearable device is not only a hardware device, but also implements a powerful function through software support, data exchange, and cloud interaction. In a broad sense, the wearable smart device includes a full-featured and large-sized device that can implement all or a part of functions without depending on a smartphone, for example, a smart watch or smart glasses, and includes a device that is dedicated to only one type of application function and needs to collaboratively work with another device such as a smartphone, for example, various smart bands or smart jewelry for monitoring physical signs.

In addition, in embodiments of this application, the terminal device may alternatively be a terminal device in an internet of things (internet of things, IoT) system. IoT is an important part in future development of an information technology, and is mainly technically characterized in connecting things to networks by using communication technologies, to achieve intelligent networks of human-machine interconnection and interconnection between things.

A terminal device in embodiments of this application may also be referred to as user equipment (user equipment, UE), a mobile station (mobile station, MS), a mobile terminal (mobile terminal, MT), an access terminal, a user unit, a user station, a mobile site, a mobile station, a remote station, a remote terminal, a mobile device, a user terminal, a terminal, a wireless communication device, a user agent, a user apparatus, or the like.

In embodiments of this application, the electronic device or each network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (which is also referred to as a main memory). An operating system may be any one or more computer operating systems for implementing service processing through a process (process), for example, a Linux operating system, a Unix operating system, an Android operating system, an iOS operating system, or a Windows operating system. The application layer includes applications such as a browser, an address book, text processing software, and instant messaging software.

In embodiments of this application, an apparatus for implementing a function of the terminal may be a terminal, or may be an apparatus that can support the terminal in implementing the function, for example, a chip system. The apparatus may be installed in the terminal.

### 6. Network device

The network device in embodiments of this application may be a public mobile communication network device, an interface device for a terminal device to access the Internet, and a form of a radio station. The network device is a radio transceiver station that exchanges information with the terminal device in a specific radio coverage area. The network device includes a base station (base station, BS), which may also be referred to as a base station device. The base station device is an apparatus deployed in a radio access network (radio access network, RAN) to provide a wireless communication function. For example, in a 2G network, a device that functions as a base station includes a base transceiver station (base transceiver station, BTS); in a 3G network, a device that functions as a base station includes a nodeB (NodeB); in a 4G network, a device that functions as a base station includes an evolved nodeB (evolved nodeB, eNB); in wireless local area networks (wireless local area networks, WLAN), a device that functions as a base station is an access point (access point, AP); and in 5G NR, a device that functions as a base station includes a gNB and a next generation evolved nodeB (ng-eNB), where the gNB communicates with the terminal device by using an NR technology, the ng-eNB communicates with the terminal device by using an evolved universal terrestrial radio access (evolved universal terrestrial radio access, E-UTRA) network technology, and both the gNB and the ng-eNB may be connected to a 5G core network. A network device 103 in embodiments of this application further includes a device that functions as a base station in a future new communication system, and the like.

In embodiments of this application, an apparatus configured to implement a function of the network device may be a network device, or may be an apparatus that can support the network device in implementing the function, for example, a chip system. The apparatus may be mounted in the network device.

To better understand a data transmission method provided in embodiments of this application, the following first describes a communication system architecture that may be involved in embodiments of this application.

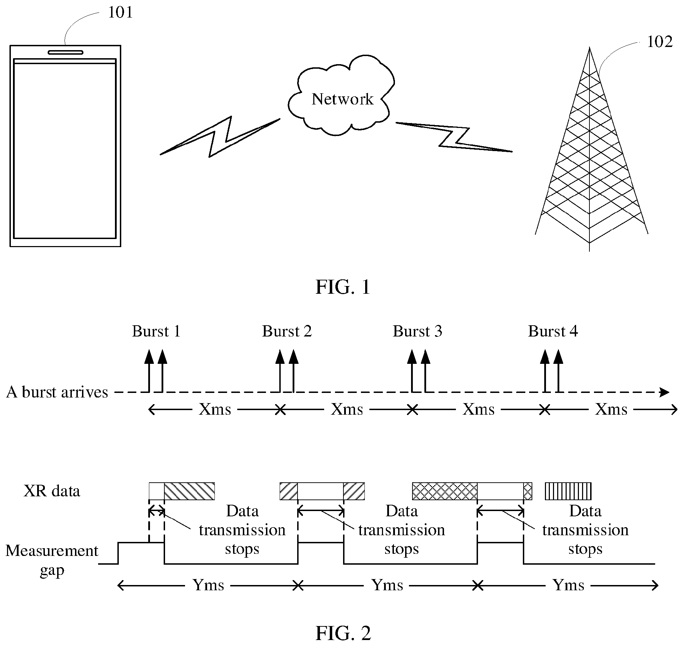

For example, refer to FIG. 1. FIG. 1 is a diagram of an architecture of a communication system according to an embodiment of this application. As shown in FIG. 1, a communication system 100 includes a terminal device 101 and a network device 102. The terminal device 101 communicates with the network device 102 by using a wireless network.

In this embodiment of this application, wireless communication between the terminal device 101 and the network device 102 may also be referred to as "communication" for short, and the term "communication" may also be described as "data transmission", "information transmission", or "transmission". A person skilled in the art may use the technical solutions provided in embodiments of this application to perform wireless communication between a network device and a terminal device, for example, perform wireless communication between an access network device and a terminal device, and perform wireless communication between a core network device and a terminal device.

Before performing inter-frequency or inter-system handover, the terminal device 101 first needs to perform inter-frequency or inter-system measurement. When a signal of a current serving cell in which the terminal device 101 is located is poor, and inter-frequency or inter-system measurement is triggered, the network device 102 delivers a measurement gap (MG) configuration indication to the terminal device 101. The MG configuration indication includes a measurement period of the MG, a measurement time window of the MG, and a measurement start time. For example, the measurement window of the MG is 6 ms, and the measurement period is 40 ms or 80 ms. After receiving the MG configuration indication, the terminal device 101 starts the MG based on the MG configuration indication. The terminal device 101 generally has only one receiver and can receive a signal on only one frequency point at a same time. Therefore, in the measurement window of the MG, the terminal device 101 does not process all uplink channels and downlink channels. That is, the terminal device 101 does not receive or transmit data. For example, when the period of the MG is 40 ms, the terminal device 101 does not receive or transmit data for consecutive 6 ms every 40 ms.

In a wireless communication system, a terminal device in a connected state performs measurement based on a measurement configuration indicated by the network device. For example, when the MG configured in the measurement configuration arrives, the terminal device stops receiving or transmitting data and immediately performs measurement. Because the terminal device does not perform data transmission within the measurement time, after the measurement time is configured, the terminal device stops receiving or transmitting data within the measurement time, and the network device does not perform scheduling.

For some data services, a time at which the terminal device receives or transmits data is likely to overlap with the measurement time, indicating that at specific times, the terminal device may be required to perform measurement while receiving or transmitting data.

For example, because the period of the MG is an integer period, for some services with a non-integer period, when the network device configures the MG, it is inevitable that the MG overlaps with such services. This means that at specific times, the terminal device may be required to perform measurement while receiving or transmitting data.

According to a current processing manner, when a data transmission time of the service overlaps with the measurement time, the terminal device receives or transmits data after the measurement time ends. As a result, a delay for the terminal device to receive or transmit data increases.

For example, an XR service is used as an example. The XR service needs to process a large amount of real-time data, including video data, audio data, sensor data, and the like. The data generally needs to be transmitted and processed with low latency, to meet a requirement of a user for immersive experience. Based on this, data in the XR service is relatively sensitive to a transmission delay requirement. Therefore, in some implementations, the data in the XR service usually employs a burst (burst) transmission mechanism.

The burst transmission mechanism is an efficient data transmission manner, which can transmit a large amount of data in a short time. In the XR service, the video data, the audio data, and the sensor data may be quickly transmitted from the network device to the terminal device by using the burst transmission mechanism, and interaction data of the user may also be transmitted from the terminal device to the network device.

Because the XR service needs to process a large amount of real-time data, and the data generally needs to be transmitted and processed with low latency, to meet this requirement, a period of the XR service is usually a non-integer period, to better adapt to requirements of different application scenarios and users.

Specifically, the period of the XR service depends on a data transmission and processing speed. Because of the large amount of data, the period of the XR service is usually relatively long, to achieve better processing effect. In addition, to meet a requirement of low latency, the period of the XR service needs to be as short as possible. Therefore, the period of the XR service is usually a non-integer period, to balance the data transmission and processing speed and the requirement for low latency.

Refer to FIG. 2. FIG. 2 is a diagram of data transmission according to an embodiment of this application.

As shown in FIG. 2, the data in the XR service employs the burst transmission mechanism. It is assumed that a period of a to-be-transmitted XR service is X milliseconds (ms), that is, a burst is generated every X milliseconds, nearly, a burst 1, a burst 2, ..., and a burst 4. When each burst arrives, data needs to be received or transmitted.

In some implementations, it is assumed that the period of the MG is Y milliseconds (ms). Because Y is usually an integer, when X is a non-integer (for example, 16.67), a time for performing data transmission by the XR service inevitably overlaps with the measurement time. For example, as shown in FIG. 2, when the burst 1 arrives, the time for performing data transmission by the XR service overlaps with a latter time period of one measurement time. When the burst 2 or the burst 3 arrives, the time for performing data transmission by the XR service overlaps with the one measurement time. When the burst 4 arrives, the time for performing data transmission by the XR service does not overlap with the measurement time.

According to a current protocol, when the data transmission time overlaps with the measurement time, the terminal device stops receiving or transmitting data, preferentially performs measurement, and continues receiving or transmitting data after the measurement time elapses. For example, as shown in FIG. 2, when the burst 1 arrives, the terminal device still performs measurement, and starts receiving or transmitting data after the measurement time elapses. When the burst 2 or the burst 3 arrives, the terminal device stops receiving or transmitting data and preferentially performs measurement, and the terminal device continues receiving or transmitting data after the measurement time elapses. When the burst 4 arrives, the terminal device may directly receive or transmit data.

It may be understood that, in the data transmission manner shown in FIG. 2, the delay for the terminal device to receive or transmit data increases, and a capacity of a to-be-transmitted service decreases. Therefore, in the XR study of Rel-19, it was agreed to enhance the MG and scheduling restrictions, and the following conclusions are reached:

Measurement gap/scheduling restriction range: Enhancements are specified for scheduling restrictions for inter-frequency RRM measurements on a frequency range 1 (frequency range, FR1) and an FR2 with measurement gaps, and for intra-frequency measurements on the FR2 without measurement gaps, to reduce impact on a capacity and impact on a single terminal device.

In conclusion, how to properly utilize the measurement time, reduce the delay for the terminal device to receive or transmit data, and improve a capacity of a non-integer period service is an urgent problem to be resolved at present. Therefore, an embodiment of this application provides a data transmission method. The terminal device can transmit data in a timely manner without waiting for the measurement time to elapse, thereby improving the capacity of the non-integer period service.

In some embodiments, when the data transmission time overlaps with the measurement time, the data may be transmitted in a timely manner by offsetting a start time of the measurement time.

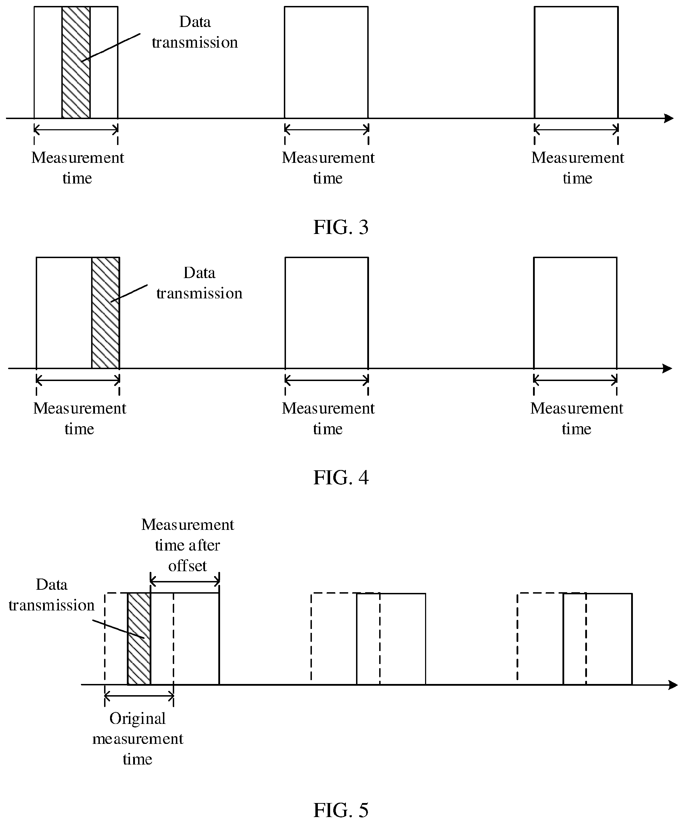

Refer to FIG. 3. FIG. 3 is a diagram of data transmission performed by offsetting the measurement time according to an embodiment of this application. In some implementations, after an original measurement time is offset, data transmission is performed within the original measurement time, and measurement is performed within the offset measurement time.

In some embodiments, when the data transmission time overlaps with the measurement time, the terminal device may transmit data within the measurement time without performing measurement.

Refer to FIG. 4. FIG. 4 is a diagram 1 of data transmission within the measurement time according to an embodiment of this application. In some implementations, the network device may allow the terminal device to transmit data in the time period within the one measurement time.

Refer to FIG. 5. FIG. 5 is a diagram 2 of data transmission within the measurement time according to an embodiment of this application. In some implementations, the network device may allow the terminal device to transmit data in a latter time period of the one measurement time.

Optionally, in some implementations, the network device may alternatively allow the terminal device to transmit data in an earlier time period of the one measurement time. A position for data transmission within the measurement time is not limited in embodiments of this application.

The following describes in detail the technical solutions in this application by using specific embodiments. It should be noted that the following embodiments may exist independently, or may be combined with each other, and same or similar content is not repeatedly described in different embodiments.

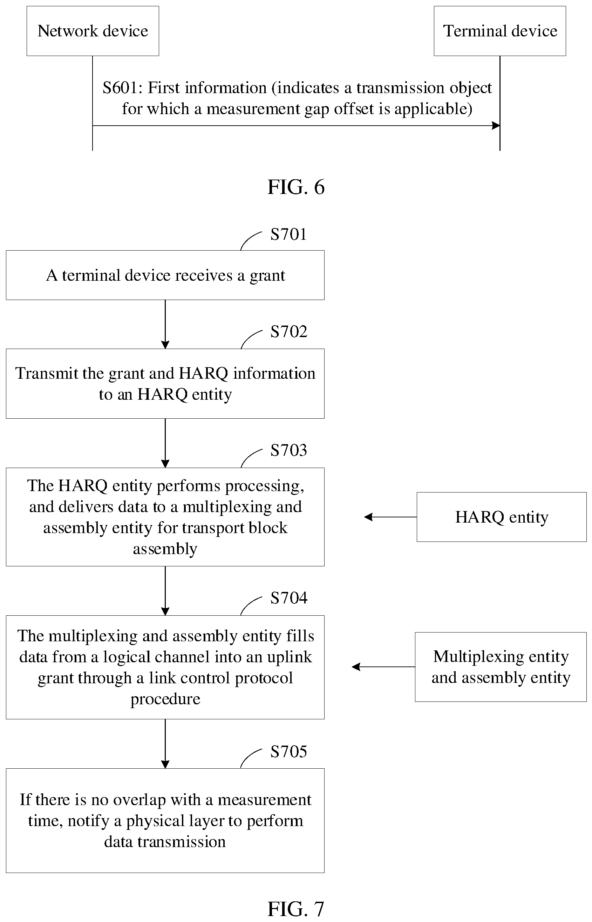

Refer to FIG. 6. FIG. 6 is a schematic flowchart 1 of steps of a data transmission method according to an embodiment of this application. In some embodiments of this application, the data transmission method may be applied to a network device, and includes the following steps.

S601: A network device sends first information to a terminal device, where the first information indicates a transmission object to which a measurement time offset is applicable.

Optionally, the transmission object includes any one of a transmission channel, a data set, a data bearer, a data stream, and a transmission resource.

In some implementations, the transmission channel may be a series of media for data transmission in a network. Optionally, the transmission channel may include a logical channel (logical channel, LCH) or a logical channel group. The logical channel is a channel formed by transmitting different types of information on a physical channel. A medium access control (medium access control, MAC) layer provides a data transport service over the logical channel. The logical channel group combines a plurality of logical channel groups to form a logical communication channel. In some communication protocols, communication efficiency and reliability can be improved through the logical channel group.

In some implementations, the transmission resource may include an uplink resource or a downlink resource. Alternatively, the transmission resource may include a time domain resource and/or a frequency domain resource.

In some implementations, the network device may preconfigure the transmission object to which the measurement time offset is applicable, and send first information to the terminal device, to indicate the transmission object to which the measurement time offset is applicable.

In some implementations, when the transmission object includes any one of the transmission channel, the data set, the data bearer, or the data stream, any one of the following several configuration manners may be used:

Configuration manner 1: Configure the first information, where the first information includes a bitmap, and each bit in the bitmap is mapped to a different transmission object. When a value of the bit is a first value, it indicates that the measurement time offset is applicable to a corresponding transmission object. When the value of the bit is a second value, it indicates that the measurement time offset is not applicable to the corresponding transmission object.

Optionally, in some implementations, the first value is 0, and the second value is 1. In some other implementations, the first value may also be 1, and the second value may be 0. This is not limited in this embodiment of this application.

For example, it is assumed that configured transmission objects are respectively LCH1 to LCH4, and a corresponding bitmap is "0011". Because a value of a first bit corresponding to the LCH1 is "0", a value of a second bit corresponding to the LCH2 is "0", a value of a third bit corresponding to the LCH3 is "1", and a value of a fourth bit corresponding to the LCH4 is "1", the first information may indicate that the measurement time offset is applicable to the LCH1 and the LCH2, and the measurement time offset is not applicable to the LCH3 and the LCH4. Alternatively, the first information may indicate that the measurement time offset is not applicable to the LCH1 and the LCH2, and the measurement time offset is applicable to the LCH3 and the LCH4.

In some implementations, a quantity of bits in the bitmap may be a quantity of transmission objects configured by the network device.

Configuration manner 2: Configure an identifier for each transmission object. The network device configures the first information, where the first information includes an identifier of the transmission object to which the measurement time offset is applicable.

For example, it is assumed that the configured transmission objects are respectively LCH1 to LCH4. If the first information includes identifiers of the LCH1 and the LCH3, the first information indicates that the measurement time offset is applicable to the LCH1 and the LCH3, and the measurement time offset is not applicable to the LCH2 and the LCH4.

In some implementations, a configuration manner of the first information may be a transmission object sequence of identifiers of transmission objects to which the measurement time offset is applicable.

Configuration manner 3: Add indication information when configuring the transmission object, where the indication information indicates whether the measurement time offset is applicable to the transmission object. That is, the first information may be carried in configuration information corresponding to the transmission object.

Optionally, the first information may be a field in the configuration information of the transmission object. When the field is a first preset value, it indicates that the measurement time offset is applicable to the transmission object. When the field is a second preset value or is empty, it indicates that the measurement time offset is not applicable to the transmission object.

In some implementations, the field may be of an enumerated data structure. When the field is ture, it indicates that the measurement time offset is applicable to the transmission object. When the field does not exist in the configuration information of the transmission object, it indicates that the measurement time offset is not applicable to the transmission object.

In some implementations, the field may be of a boolean (boolean) data structure. When the field is ture, it indicates that the measurement time offset is applicable to the transmission object. When the field is false, it indicates that the measurement time offset is not applicable to the transmission object.

In some implementations, when the transmission object includes the transmission resource, any one of the following several configuration manners may be used:

Configuration manner 1: Configure the first information, where the first information includes a bitmap, and each bit in the bitmap is mapped to a different transmission resource. When a value of the bit is a first value, it indicates that the measurement time offset is applicable to a corresponding transmission resource. When the value of the bit is a second value, it indicates that the measurement time offset is not applicable to the corresponding transmission resource.

Optionally, in some implementations, the first value is 0, and the second value is 1. In some other implementations, the first value may be 1, and the second value may be 0. This is not limited in this embodiment of this application.

For example, it is assumed that configured transmission resources are respectively CG1 to CG4, and a corresponding bitmap is "0011". Because a value of a first bit corresponding to the CG1 is "0", a value of a second bit corresponding to the CG2 is "0", a value of a third bit corresponding to the CG3 is "1", and a value of a fourth bit corresponding to the CG4 is "1", the first information may indicate that the measurement time offset is applicable to the CG1 and the CG2, and the measurement time offset is not applicable to the CG3 and the CG4. Alternatively, the first information may indicate that the measurement time offset is not applicable to the CG1 and the CG2, and the measurement time offset is applicable to the CG3 and the CG4.

In some implementations, a quantity of bits in the bitmap may be a quantity of transmission resources configured by the network device.

Configuration manner 2: The network device configures the first information, where the first information includes an identifier of a transmission resource to which the measurement time offset is applicable.

For example, it is assumed that the configured transmission resources are respectively CG1 to CG4. If the first information includes identifiers of the CG1 and the CG3, the first information may indicate that the measurement time offset is applicable to the CG1 and the CG3, and the measurement time offset is not applicable to the CG2 and the CG4.

In some implementations, a configuration manner of the first information may be a transmission resource sequence of identifiers of transmission resources to which the measurement time offset is applicable.

Configuration manner 3: Configure the first information when configuring the transmission resource. That is, the first information may be carried in resource configuration information corresponding to the transmission resource, to indicate whether the measurement time offset is applicable to the transmission resource.

Optionally, the first information may be a field in the resource configuration information. When the field is a first preset value, it indicates that the measurement time offset is applicable to the transmission resource. When the field is a second preset value or is empty, it indicates that the measurement time offset is not applicable to the transmission resource.

In some implementations, the first information may be of an enumerated data structure. When the measurement time offset is applicable to the configured transmission resource, the first information may be ture. When the measurement time offset is not applicable to the configured transmission resource, the first information does not exist in the transmission resource. That is, the first information is not configured.

In some implementations, the first information may be of a boolean (boolean) data structure. When the measurement time offset is applicable to the configured transmission resource, the first information in the transmission resource may be ture. When the measurement time offset is not applicable to the configured transmission resource, the first information in the transmission resource may be false.

In some implementations, a type of the first information may be a holding type. After the network device configures the first information, if the terminal device does not configure the first information during reconfiguration or in a reconfiguration message, the first information may keep a current configuration valid.

In some implementations, the type of the first information may also be a release type. After the network device configures the first information, if the terminal device does not configure the first information during reconfiguration or in the reconfiguration message, the configuration of the first information needs to be released.

In some implementations, the network device may preconfigure an offset duration, and configure a transmission object to which the offset duration is applicable. The transmission object to which the offset duration is applicable is the transmission object to which the measurement time offset is applicable.

In some implementations, the first information may further indicate the offset duration.

In some implementations, the network device may also send second information to the terminal device, where the second information includes the offset duration.

In some implementations, if the network device receives third information from the terminal device, and the third information indicates a start time at which the first measurement time is offset, the network device may offset the start time of the first measurement time based on the preconfigured offset duration.

In some implementations, the network device may alternatively configure only the transmission object to which the measurement time offset is applicable, and the terminal device determines the offset duration. For example, the terminal device sends, to the network device, first sub-indication information indicating that the measurement time requires to be offset, and sends second sub-indication information after data transmission elapses. After receiving the second indication information, the network device determines that the terminal device needs to perform measurement.

In some implementations, if the network device receives fourth information from the terminal device, and the fourth information includes the offset duration of the first measurement time determined by the terminal device, the network device may offset the start time of the first measurement time based on the offset duration of the first measurement time determined by the terminal device.

In some implementations, the first measurement time may include a measurement time window or an SMTC measurement window of a measurement gap.

In some implementations, the terminal device may predetermine the first measurement time, including a measurement start time and a measurement end time. Optionally, the terminal device may obtain the first measurement time by interacting with the network device or from a network configuration.

In some implementations, when uplink transmission or downlink transmission of first data needs to be performed on a resource, the terminal device may predetermine a transmission time of the transmission. Optionally, the transmission time includes a transmission start time and/or a transmission end time. Optionally, the terminal device may determine the transmission time based on scheduling information of the resource.

In some implementations, the terminal device compares the transmission time with the first measurement time. If the transmission time overlaps with the first measurement time, it may be considered that the transmission overlaps with the first measurement time. If the transmission time does not overlap with the first measurement time, it may be considered that the transmission does not overlap with the first measurement time.

In some implementations, after determining that the transmission overlaps with the first measurement time, the terminal device may determine the offset duration of the first measurement time based on an overlap duration between the transmission and the first measurement time. Optionally, the offset duration of the first measurement time may be greater than or equal to the overlap duration. Alternatively, the offset duration of the first measurement time may be less than the overlap duration.

Optionally, the first data may be uplink data, and the uplink data includes data on a physical uplink control channel (physical uplink control channel, PUCCH) or a physical uplink shared channel (physical uplink shared channel, PUSCH). Alternatively, the first data may be downlink data, and the downlink data includes data on a physical downlink control channel (physical downlink control channel, PDCCH) or a physical downlink shared channel (physical downlink shared channel, PDSCH), for example, uplink control information (uplink control information, UCI) of the PUCCH or downlink control information (downlink control information, DCI) of the PDCCH.

Optionally, the first data may include XR service data, and a type of the first data is not limited in this embodiment.

In some implementations, when the transmission object includes any one of the transmission channel, the data set, the data bearer, and the data stream, if the terminal device needs to perform transmission, the transmission overlaps with the measurement time, and the transmission object to which the measurement time offset is applicable is configured, the terminal device notifies a physical layer to generate the transmission when data in a MAC layer protocol data unit (protocol data unit, PDU) has the transmission object to which the measurement time offset is applicable. In addition, the terminal device may notify a radio resource control (radio resource control, RRC) layer to delay the start time of the measurement time. Optionally, a latency duration may be an offset duration configured by the network device, or may be the offset duration determined by the terminal device.

When the data in the MAC PDU does not come from the transmission object to which the measurement time offset is applicable, the terminal device does not notify the physical layer to generate the transmission. In this case, the terminal device may perform measurement within the measurement time.

In some implementations, when the transmission object includes the transmission resource, the terminal device may map to-be-transmitted data to the transmission resource according to the link control protocol (link control protocol, LCP). When the terminal device performs transmission, if the transmission overlaps with the measurement time, and the measurement time offset is applicable to the transmission resource, the terminal device notifies the physical layer to generate the transmission. In addition, the terminal device may notify a higher layer to delay the start time of the measurement time. Optionally, the latency duration may be the offset duration configured by the network device, or may be the offset duration determined by the terminal device.

In some implementations, when the terminal device performs transmission, if the transmission overlaps with the measurement time, and a resource corresponding to the transmission is an uplink grant (UL Grant), the terminal device notifies the physical layer to generate the transmission. In addition, the terminal device may notify the higher layer to delay the start time of the measurement time. Optionally, the latency duration may be the offset duration configured by the network device, or may be the offset duration determined by the terminal device.

In the data transmission method in this embodiment of this application, the network device sends the first information to the terminal device, to indicate the transmission object to which the measurement time offset is applicable. Therefore, when the terminal device has the to-be-transmitted data and the transmission overlaps with the measurement time, the terminal device can perform data transmission when the start time of the measurement time is offset, and can transmit the data in a timely manner without waiting for the measurement time to elapse.

Refer to FIG. 7. FIG. 7 is a schematic flowchart of a data transmission mechanism according to an embodiment of this application. In some embodiments of this application, the data transmission mechanism includes the following steps.

S701: A terminal device receives a grant.

In some implementations, the grant may be an uplink grant, that is, a grant that allows the terminal device to transmit data. When obtaining a transmission grant, the terminal device may send data to a network device.

S702: Transmit the grant and hybrid automatic repeat request (hybrid automatic repeat request, HARQ) information to a HARQ entity.

HARQ information, transmitted on a downlink shared channel (downlink shared channel, DL-SCH), an uplink shared channel (uplink shared channel, UL-SCH), and a sidelink shared channel (sidelink shared channel, SL-SCH) includes a new data indicator (new data indicator, NDI), a transport block size (transport block size, TBS), a redundancy version (incremental redundancy, RV), and a HARQ process ID.

In network communication, data is usually packed into data packets for transmission. An error may occur in the data packets during transmission due to various reasons, such as channel interference, or noise. To ensure reliable data transmission, the HARQ entity performs error detection on a received data packet.

S703: The HARQ entity performs processing, and delivers the data packet to a multiplexing and assembly entity for transport block (Transport Block, TB) assembly.

In some implementations, after receiving the data packet, the HARQ entity performs processing, including determining a data type for transmission and the HARQ information, indicating the multiplexing and assembly entity to assemble a MAC subPDU, and obtaining a to-be-transmitted MAC PDU through the multiplexing and assembly entity.

S704: The multiplexing and assembly entity fills data from a logical channel into an uplink grant through a link control protocol (Link Control Protocol, LCP) procedure.

In some implementations, a multiplexing entity is responsible for multiplexing data packets from different transmission objects into one TB. The entity combines, according to specific protocols and rules, data packets from different sources into a complete transport block for subsequent transmission and processing.

The LCP procedure includes a token bucket rule (filling data onto an uplink resource based on a token bucket size) and a logical channel mapping restriction.

After multiplexing is complete, the multiplexing entity delivers the transport block to an assembly entity for final assembly. The assembly entity assembles, according to specific protocols and rules, the transport blocks from the multiplexing entity into a complete transmission unit (for example, a data packet or a frame) for subsequent transmission and processing.

In a communication system, the LCP procedure is a protocol used to establish and maintain a data link. Through the LCP procedure, communication parties can negotiate and configure link parameters, to ensure reliability and efficiency of data transmission.

In a negotiation process, the terminal device may request a specific logical channel from the network device and specify parameters such as a required data transmission rate, a data packet size, and the like. The network device determines, based on the request and system resources, whether to grant the uplink grant and a specific grant parameter.

Once the terminal device obtains the uplink grant, the terminal device may send data through the logical channel within a scope of the grant. In a data transmission process, an LCP is responsible for monitoring a link state and performance, to ensure reliability and stability of data transmission. If a link problem or performance degradation is detected, the LCP may renegotiate link parameters or take other measures to restore link performance.

S705: If there is no overlap with a measurement time, notify a physical layer to perform data transmission.

In the communication system, the physical layer is a layer responsible for transmitting an original bit stream, and provides a physical medium and an interface for data transmission. When an upper-layer protocol entity needs to send data, the upper-layer protocol entity transfers data to the physical layer for transmission. The data is the to-be-transmitted MAC PDU.

However, sometimes data transmission may conflict with the measurement time. To avoid such conflict, the protocol entity notifies the physical layer to perform data transmission outside the measurement time. That is, in some implementations, when data transmission conflicts with the measurement time, the terminal device does not notify the physical layer to perform data transmission. Only when data transmission does not overlap with the measurement time, the terminal device notifies the physical layer to perform data transmission.

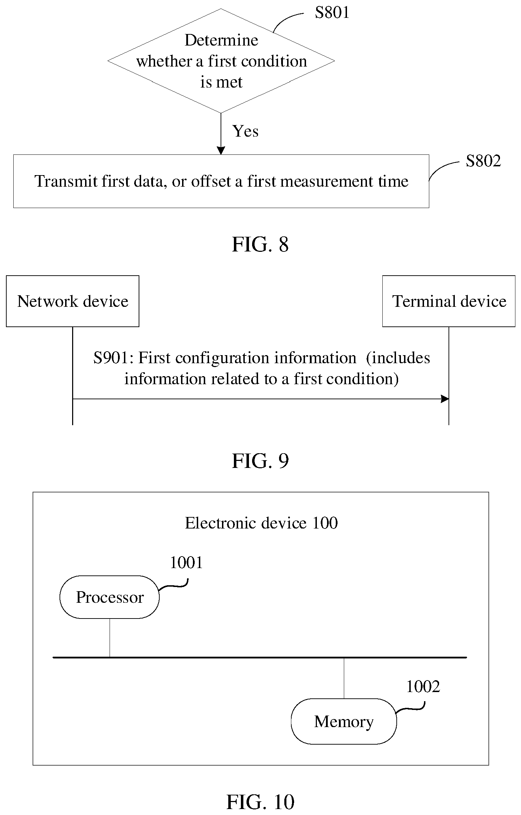

Refer to FIG. 8. FIG. 8 is a schematic flowchart 2 of steps of a data transmission method according to an embodiment of this application. In some embodiments of this application, the data transmission method may be applied to a terminal device, and includes the following steps.

S801: Determine whether a first condition is met.

S802: When the first condition is met, transmit first data or offset a measurement time.

Optionally, when the first condition is not met, the first data is not transmitted, or the measurement time is not offset.

In some implementations, when the terminal device needs to transmit the first data, if the transmission overlaps with the measurement time, the terminal device may determine whether the first condition is met. When the first condition is met, the terminal device may transmit the first data, or may offset the measurement time. Therefore, the terminal device can transmit the first data in a timely manner without waiting for the measurement time to elapse.

In some implementations, when the terminal device chooses to offset the measurement time, the terminal device may notify a network device to offset a start time of the measurement time. Optionally, a latency duration may be an offset duration configured by the network device, or may be an offset duration determined by the terminal device.

In some implementations, when the terminal device transmits the first data, the terminal device may send indication information to the network device, to indicate, to the network device, a time at which the terminal device performs data transmission, enabling the network device to receive the first data within the time.

In some implementations, when the terminal device transmits the first data, either the measurement time is not offset, and the first data is transmitted within the measurement time; or the measurement time is offset, in this case, because the transmission does not occur within the measurement time, the first data can be transmitted directly. The transmission of the first data may be that a first protocol layer notifies a second protocol layer to perform transmission or generate the first data, and the second protocol layer transmits the first data. The first protocol layer may be a MAC protocol layer, and the second protocol layer may be a physical (physical, PHY) protocol layer.

In some implementations, the terminal device offsets the measurement time according to the first condition, and the terminal device may offset the measurement time backward or forward based on a data transmission time, a preset duration, or a first time. Optionally, the first time may be a time at which data transmission ends.

In some implementations, the first condition may be related to any one or more of a data type of the first data, a transmission object corresponding to the first data, and a first state.

Optionally, the first state may be related to a link state (an uplink or a downlink) and/or a mobility state of the terminal device.

Optionally, the link state may be related to a network congestion degree, link quality, and the like.

Optionally, in some implementations, the first condition may be related only to the data type of the first data. For example, the first condition may be that the first data includes a specific type of data.

Optionally, the specific type of data may be one or more of retransmission data, initial transmission data, and delay-sensitive data.

In some implementations, if an NDI is toggled or switched, it may be determined that the first data includes the initial transmission data. For example, when the NDI changes from 0 to 1 or the NDI changes from 1 to 0, it indicates that the initial transmission data exists.

In some implementations, if the NDI is not toggled or switched, it may be determined that the first data includes the retransmission data. For example, when the NDI remains 1 or 0, it indicates that a data transmission state does not change. In this case, the first data may include the retransmission data.

In some implementations, the delay-sensitive data is data whose delay duration is less than or greater than a preset delay threshold.

Optionally, when the delay duration is a remaining duration of the data, the data is the delay-sensitive data if the remaining duration is less than the preset delay threshold. When the delay duration is a buffering duration of the data, the data is the delay-sensitive data if the buffering duration is greater than the preset delay threshold.

In some implementations, if the first data includes sub-data 1, sub-data 2, and sub-data 3, a delay duration of the first data may be a delay duration corresponding to data whose delay duration is the longest (largest) or the shortest (smallest) among the sub-data 1, the sub-data 2, and the sub-data 3.

For example, if the first data includes the sub-data 1, the sub-data 2, and the sub-data 3, and delay durations of the sub-data 1, the sub-data 2, and the sub-data 3 are respectively 1 ms, 2 ms, and 3 ms, the delay duration of the first data may be 1 ms or 3 ms.

In some implementations, whether the first data is the delay-sensitive data may be determined by determining whether the first data includes delay-sensitive sub-data. When the first data includes the delay-sensitive sub-data, the first data is the delay-sensitive data. When the first data does not include the delay-sensitive sub-data, the first data is not the delay-sensitive data.

For example, when an RLC layer determines that a remaining duration of the sub-data 1 is less than the preset delay threshold, the sub-data 1 may be the delay-sensitive data. In this case, if data 1 at the MAC layer includes sub-data 1 and sub-data 2 at the RLC layer, it may be determined that the data 1 at the MAC layer is the delay-sensitive data. If data 1 at the MAC layer includes sub-data 2 and sub-data 3 at the RLC layer, it may be determined that the data 1 at the MAC layer is not the delay-sensitive data.

For another example, when the RLC layer determines that a buffering duration of the sub-data 1 is greater than the preset delay threshold, the sub-data 1 may be the delay-sensitive data. In this case, if data 1 at the MAC layer includes sub-data 1 and sub-data 2 at the RLC layer, it may be determined that the data 1 at the MAC layer is the delay-sensitive data. If data 1 at the MAC layer includes sub-data 2 and sub-data 3 at the RLC layer, it may be determined that the data 1 at the MAC layer is not the delay-sensitive data.

Optionally, in some implementations, the first condition may be related only to a transmission object corresponding to the first data. For example, the first condition may be that the transmission object corresponding to the first data is a transmission object to which a measurement time offset is applicable.

Optionally, in some implementations, the first condition may be related only to the first state.

Optionally, in some implementations, the first condition may be simultaneously related to both the data type of the first data and the transmission object corresponding to the first data.

Optionally, in some implementations, the first condition may be simultaneously related to both the data type of the first data and the first state.

Optionally, in some implementations, the first condition may be simultaneously related to both the transmission object corresponding to the first data and the first state.

Optionally, in some implementations, the first condition may be simultaneously related to the data type of the first data, the transmission object corresponding to the first data, and the first state.

In some implementations, the first condition may be indicated by the network device. For example, the network device may send the indication information to the terminal device, where the indication information includes the first condition.

The following embodiments separately describe the first condition in the foregoing implementations.

Embodiment 1: The first condition is that the first data includes the specific type of data.

In some implementations, the first condition may be that the first data includes the initial transmission data.

In some implementations, when the terminal device obtains the first data for transmission, if the transmission overlaps with the measurement time, and the first data includes the initial transmission data, the terminal device may transmit the first data, or may offset the measurement time.

Optionally, when the terminal device obtains the first data for transmission, if the transmission overlaps with the measurement time, and the transmission is an initial transmission, the terminal device may choose to transmit the first data within the measurement time, or may choose to offset the measurement time. Therefore, the terminal device can transmit the initial transmission data in a timely manner without waiting for the measurement time to elapse.

In some implementations, when the terminal device chooses to offset the measurement time, the terminal device may notify the network device to offset the start time of the measurement time. Optionally, the offset duration may be the offset duration configured by the network device, or may be the offset duration determined by the terminal device.

It may be understood that, after the terminal device notifies the network device to offset the start time of the measurement time, the terminal device does not need to perform measurement at an original start time of the measurement time, so that the first data can be transmitted in a timely manner.

In some implementations, the first condition may be that the first data includes the retransmission data.

In some implementations, when the terminal device obtains the first data for transmission, if the transmission overlaps with the measurement time, and the first data includes the retransmission data, the terminal device may transmit the first data, or may offset the measurement time.

Optionally, when the terminal device obtains the first data for transmission, if the transmission overlaps with the measurement time, and the transmission is a retransmission, the terminal device may choose to transmit the first data within the measurement time, or may choose to offset the measurement time. Therefore, the terminal device can transmit the retransmission data in a timely manner without waiting for the measurement time to elapse.

In some implementations, when the terminal device chooses to offset the measurement time, the terminal device may notify the network device to offset the start time of the measurement time. Optionally, the offset duration may be the offset duration configured by the network device, or may be the offset duration determined by the terminal device.

It may be understood that, after the terminal device notifies the network device to offset the start time of the measurement time, the terminal device does not need to perform measurement at an original start time of the measurement time, so that the first data can be transmitted in a timely manner.

In some implementations, the first condition may be that the first data includes the delay-sensitive data.

In some implementations, when the terminal device obtains the first data for transmission, if the transmission overlaps with the measurement time, and the first data includes the delay-sensitive data, the terminal device may transmit the first data, or may offset the measurement time.

Optionally, when the terminal device obtains the first data for transmission, if the transmission overlaps with the measurement time, and the first data includes the delay-sensitive data, the terminal device may choose to transmit the first data within the measurement time, or may choose to offset the measurement time. Therefore, the terminal device can transmit the delay-sensitive data in a timely manner without waiting for the measurement time to elapse.

In some implementations, when the terminal device chooses to offset the measurement time, the terminal device may notify the network device to offset the start time of the measurement time. Optionally, the offset duration may be the offset duration configured by the network device, or may be the offset duration determined by the terminal device.

It may be understood that, after the terminal device notifies the network device to offset the start time of the measurement time, the terminal device does not need to perform measurement at an original start time of the measurement time, so that the first data can be transmitted in a timely manner.

Embodiment 2: The first condition is that the transmission object corresponding to the first data is the transmission object to which the measurement time offset is applicable.

Optionally, the transmission object includes any one of a transmission channel, a data set, a data bearer, a data stream, and a transmission resource.

In some implementations, when the terminal device obtains the first data for transmission, if the transmission overlaps with the measurement time, and the transmission object corresponding to the first data is the transmission object to which the measurement time offset is applicable, the terminal device may offset the measurement time.

Optionally, when the terminal device obtains the first data for transmission and the transmission overlaps with the measurement time, if the first data comes from the transmission object to which the measurement time offset is applicable, the terminal device may offset the measurement time. Therefore, the terminal device can transmit the first data in a timely manner without waiting for the measurement time to elapse.

In some implementations, when the terminal device chooses to offset the measurement time, the terminal device may notify the network device to offset the start time of the measurement time. Optionally, the latency duration may be the offset duration configured by the network device, or may be the offset duration determined by the terminal device.

It may be understood that, after the terminal device notifies the network device to offset the start time of the measurement time, the terminal device does not need to perform measurement at an original start time of the measurement time, so that the first data can be transmitted in a timely manner.

In some implementations, the first condition may also be that the transmission object corresponding to the first data is a transmission object for which data transmission is performable within the measurement time.

In some implementations, when the terminal device obtains the first data for transmission, if the transmission overlaps with the measurement time, and the transmission object corresponding to the first data is the transmission object for which data transmission is performable within the measurement time, the terminal device may transmit the first data within the measurement time.

Embodiment 3: The first condition is that the first data includes the specific type of data, and the first data corresponds to a transmission object that meets a second condition.

Optionally, the transmission object includes any one of a transmission channel, a data set, a data bearer, a data stream, and a transmission resource.

Optionally, the second condition is that the transmission object to which the measurement time offset is applicable or the transmission object for which data transmission is performable within the measurement time is included.

Optionally, in some implementations, the first condition may be that the first data corresponds to the transmission object that meets the second condition, and the first data includes the initial transmission data.

In some implementations, when the terminal device obtains the first data for transmission and the transmission overlaps with the measurement time, if the first data corresponds to the transmission object that meets the second condition, and the first data includes the initial transmission data, the terminal device may transmit the first data, or may offset the measurement time.

In some implementations, when the terminal device obtains the first data for transmission and the transmission overlaps with the measurement time, if the transmission object corresponding to the first data is the transmission object to which the measurement time offset is applicable, and the first data includes the initial transmission data, the terminal device may offset the measurement time.

In some implementations, when the terminal device obtains the first data for transmission and the transmission overlaps with the measurement time, if the transmission object corresponding to the first data is the transmission object for which data transmission is performable within the measurement time, and the first data includes the initial transmission data, the terminal device may transmit the first data within the measurement time.

In some implementations, when the terminal device chooses to offset the measurement time, the terminal device may notify the network device to offset the start time of the measurement time. Optionally, the offset duration may be the offset duration configured by the network device, or may be the offset duration determined by the terminal device.

It may be understood that, after the terminal device notifies the network device to offset the start time of the measurement time, the terminal device does not need to perform measurement at an original start time of the measurement time, so that the first data can be transmitted in a timely manner.

Optionally, in some implementations, the first condition may be that the first data corresponds to the transmission object that meets the second condition, and the first data includes the retransmission data.

In some implementations, when the terminal device obtains the first data for transmission and the transmission overlaps with the measurement time, if the first data corresponds to the transmission object that meets the second condition, and the first data includes the retransmission data, the terminal device may transmit the first data, or may offset the measurement time.

In some implementations, when the terminal device obtains the first data for transmission and the transmission overlaps with the measurement time, if the transmission object corresponding to the first data is the transmission object to which the measurement time offset is applicable, and the first data includes the retransmission data, the terminal device may offset the measurement time.

In some implementations, when the terminal device obtains the first data for transmission and the transmission overlaps with the measurement time, if the transmission object corresponding to the first data is the transmission object for which data transmission is performable within the measurement time, and the first data includes the retransmission data, the terminal device may transmit the first data within the measurement time.

In some implementations, when the terminal device chooses to offset the measurement time, the terminal device may notify the network device to offset the start time of the measurement time. Optionally, the offset duration may be the offset duration configured by the network device, or may be the offset duration determined by the terminal device.

It may be understood that, after the terminal device notifies the network device to offset the start time of the measurement time, the terminal device does not need to perform measurement at an original start time of the measurement time, so that the first data can be transmitted in a timely manner.

Optionally, in some implementations, the first condition may be that the first data corresponds to the transmission object that meets the second condition, and the first data includes the delay-sensitive data.

In some implementations, when the terminal device obtains the first data for transmission and the transmission overlaps with the measurement time, if the first data corresponds to the transmission object that meets the second condition, and the first data includes the delay-sensitive data, the terminal device may transmit the first data, or may offset the measurement time.

In some implementations, when the terminal device obtains the first data for transmission and the transmission overlaps with the measurement time, if the transmission object corresponding to the first data is the transmission object to which the measurement time offset is applicable, and the first data includes the delay-sensitive data, the terminal device may offset the measurement time.

In some implementations, when the terminal device obtains the first data for transmission and the transmission overlaps with the measurement time, if the transmission object corresponding to the first data is the transmission object for which data transmission is performable within the measurement time, and the first data includes the delay-sensitive data, the terminal device may transmit the first data within the measurement time.

In some implementations, when the terminal device chooses to offset the measurement time, the terminal device may notify the network device to offset the start time of the measurement time. Optionally, the offset duration may be the offset duration configured by the network device, or may be the offset duration determined by the terminal device.

It may be understood that, after the terminal device notifies the network device to offset the start time of the measurement time, the terminal device does not need to perform measurement at an original start time of the measurement time, so that the first data can be transmitted in a timely manner.

Embodiment 4: The first condition may be that the first state meets a third condition.

Optionally, the first state includes at least one of the following: mobility of the terminal device, a congestion status, and a link state.

Optionally, the mobility of the terminal device may be low mobility (a cell quality change is less than a specified threshold), or normal mobility (for example, a quantity of cell reselections is less than a first threshold), or medium mobility (for example, a quantity of cell reselections is greater than a first threshold and less than a second threshold), or high mobility (for example, a quantity of cell reselections is greater than a second threshold), or a static state, or a non-cell-edge state (for example, cell quality is greater than a threshold, and a receiving capability level of a cell is greater than a threshold). The cell quality may be represented by a decibel (dB), a reference signal receiving power (reference signal receiving power, RSRP), a reference signal received quality (reference signal received quality, RSRQ), a received signal strength indication (received signal strength indication, RSSI), or a signal to interference plus noise ratio (signal to interference plus noise ratio, SINR).

Optionally, the congestion status may be a congestion status of the terminal device or a congestion status of the network device. When traffic is less than a preset congestion threshold, the congestion status may be non-congestion. When traffic is greater than a preset congestion threshold, the congestion status may be congestion.

Optionally, the link state may be an uplink state or a downlink state.

In some implementations, that the first state meets the third condition includes:

The mobility of the terminal device is that a mobility speed of the terminal device is less than a preset speed threshold; and
the mobility of the terminal device may be the low mobility, the normal mobility, the medium mobility, the high mobility, the static state, or the non-cell-edge state.

The congestion status is congestion or non-congestion.

The link state is that link quality (any one of the RSRP, the RSRQ, the RSSI, or the SINR) is less than a first quality threshold, or the link state may be that link quality is greater than a first quality threshold or less than a second quality threshold, or the link state may be that link quality is greater than a second quality threshold.

In some implementations, congestion or non-congestion indication information may be sent by the network device to the terminal device, and the terminal device may determine, based on the indication information, whether congestion occurs, where the indication information may indicate that the transmission object is congested or not congested. Optionally, the PSI-Based SDU Discard Activation/Deactivation MAC CE may also indicate whether the transmission object is congested or not congested. When the transmission object is activation of PSI (PDU set importance)-based SDU discarding, it indicates that the transmission object is congested. When the transmission object is deactivation of PSI-based SDU discarding, it indicates that the transmission object is not congested.

In some implementations, the congestion or non-congestion is determined by the terminal device. For example, when a current buffered data amount of a terminal exceeds a threshold, congestion occurs. When a current buffered data amount of a terminal is less than a threshold, congestion does not occur.

In some implementations, when the terminal device needs to transmit the first data and the transmission overlaps with the measurement time, if the first condition is met, the terminal device may transmit the first data, or may offset the measurement time.

Optionally, when the terminal device needs to transmit the first data and the transmission overlaps with the measurement time, if the first state meets the third condition, the terminal device may choose to transmit the first data within the measurement time, or may choose to offset the measurement time. Therefore, the terminal device can transmit the initial transmission data in a timely manner without waiting for the measurement time to elapse.

Optionally, when the terminal device needs to transmit the first data and the transmission overlaps with the measurement time, if the transmission object corresponding to the first data is congested, the terminal device may choose to transmit the first data within the measurement time, or may choose to offset the measurement time. Therefore, the terminal device can transmit the initial transmission data in a timely manner without waiting for the measurement time to elapse.

In some implementations, when the terminal device chooses to offset the measurement time, the terminal device may notify the network device to offset the start time of the measurement time. Optionally, the offset duration may be the offset duration configured by the network device, or may be the offset duration determined by the terminal device.

It may be understood that, after the terminal device notifies the network device to offset the start time of the measurement time, the terminal device does not need to perform measurement at an original start time of the measurement time, so that the first data can be transmitted in a timely manner.

Embodiment 5: The first condition is that the first data includes the specific type of data, and the first state meets the third condition.

Optionally, in some implementations, the first condition may be that the first data includes the initial transmission data, and the first state meets the third condition.

In some implementations, when the terminal device obtains the first data for transmission and the transmission overlaps with the measurement time, if the first data includes the initial transmission data, and the first state meets the third condition, the terminal device may transmit the first data, or may offset the measurement time.

Optionally, when the terminal device needs to transmit the first data and the transmission overlaps with the measurement time, if the transmission is an initial transmission and the first state meets the third condition, the terminal device may choose to transmit the first data within the measurement time, or may choose to offset the measurement time. Therefore, the terminal device can transmit the initial transmission data in a timely manner without waiting for the measurement time to elapse.

In some implementations, when the terminal device chooses to offset the measurement time, the terminal device may notify the network device to offset the start time of the measurement time. Optionally, the offset duration may be the offset duration configured by the network device, or may be the offset duration determined by the terminal device.

It may be understood that, after the terminal device notifies the network device to offset the start time of the measurement time, the terminal device does not need to perform measurement at an original start time of the measurement time, so that the first data can be transmitted in a timely manner.

Optionally, in some implementations, the first condition may be that the first data includes the retransmission data, and the first state meets the third condition.

In some implementations, when the terminal device obtains the first data for transmission and the transmission overlaps with the measurement time, if the first data includes the retransmission data, and the first state meets the third condition, the terminal device may transmit the first data, or may offset the measurement time.

Optionally, when the terminal device needs to transmit the first data and the transmission overlaps with the measurement time, if the transmission is a retransmission, and the first state meets the third condition, the terminal device may choose to transmit the first data within the measurement time, or may choose to offset the measurement time. Therefore, the terminal device can transmit the retransmission data in a timely manner without waiting for the measurement time to elapse.

In some implementations, when the terminal device chooses to offset the measurement time, the terminal device may notify the network device to offset the start time of the measurement time. Optionally, the offset duration may be the offset duration configured by the network device, or may be the offset duration determined by the terminal device.

It may be understood that, after the terminal device notifies the network device to offset the start time of the measurement time, the terminal device does not need to perform measurement at an original start time of the measurement time, so that the first data can be transmitted in a timely manner.

Optionally, in some implementations, the first condition may be that the first data includes the delay-sensitive data, and the first state meets the third condition.

In some implementations, when the terminal device obtains the first data for transmission and the transmission overlaps with the measurement time, if the first data includes the delay-sensitive data, and the first state meets the third condition, the terminal device may transmit the first data, or may offset the measurement time.

Optionally, when the terminal device needs to transmit the first data and the transmission overlaps with the measurement time, if the first data includes delay-sensitive data, and the first state meets the third condition, the terminal device may choose to transmit the first data within the measurement time, or may choose to offset the measurement time. Therefore, the terminal device can transmit the delay-sensitive data in a timely manner without waiting for the measurement time to elapse.

In some implementations, when the terminal device chooses to offset the measurement time, the terminal device may notify the network device to offset the start time of the measurement time. Optionally, the offset duration may be the offset duration configured by the network device, or may be the offset duration determined by the terminal device.

It may be understood that, after the terminal device notifies the network device to offset the start time of the measurement time, the terminal device does not need to perform measurement at an original start time of the measurement time, so that the first data can be transmitted in a timely manner.

Embodiment 6: The first condition is that the first data corresponds to the transmission object that meets the second condition, and the first state meets the third condition.

Optionally, the transmission object includes any one of a transmission channel, a data set, a data bearer, a data stream, and a transmission resource.

Optionally, the second condition is that the transmission object to which the measurement time offset is applicable, or the transmission object for which data transmission is performable within the measurement time is included.

In some implementations, when the terminal device needs to transmit the first data and the transmission overlaps with the measurement time, if the first data comes from the transmission object that meets the second condition, and the first state meets the third condition, the terminal device may choose to transmit the first data within the measurement time, or may choose to offset the measurement time.

In some implementations, when the terminal device obtains the first data for transmission and the transmission overlaps with the measurement time, if the transmission object corresponding to the first data is the transmission object to which the measurement time offset is applicable, and the first state meets the third condition, the terminal device offsets the measurement time.

In some implementations, when the terminal device obtains the first data for transmission and the transmission overlaps with the measurement time, if the transmission object corresponding to the first data is the transmission object to which the measurement time offset is applicable, and the transmission object is congested, the terminal device may offset the measurement time.

In some implementations, when the terminal device obtains the first data for transmission and the transmission overlaps with the measurement time, if the transmission object corresponding to the first data is the transmission object for which data transmission is performable within the measurement time, and the first state meets the third condition, the terminal device may transmit the first data within the measurement time.

In some implementations, when the terminal device obtains the first data for transmission and the transmission overlaps with the measurement time, if the transmission object corresponding to the first data is the transmission object for which data transmission is performable within the measurement time, and the transmission object is congested, the terminal device may transmit the first data within the measurement time.

In some implementations, when the terminal device chooses to offset the measurement time, the terminal device may notify the network device to offset the start time of the measurement time. Optionally, the offset duration may be the offset duration configured by the network device, or may be the offset duration determined by the terminal device.

It may be understood that, after the terminal device notifies the network device to offset the start time of the measurement time, the terminal device does not need to perform measurement at an original start time of the measurement time, so that the first data can be transmitted in a timely manner.

Embodiment 7: The first condition is that the first data includes the specific type data, the first data corresponds to the transmission object that meets the second condition, and the first state meets the third condition.

Optionally, the transmission object includes any one of a transmission channel, a data set, a data bearer, a data stream, and a transmission resource.

Optionally, the second condition is that the transmission object to which the measurement time offset is applicable, or the transmission object for which data transmission is performable within the measurement time is included.

Optionally, in some implementations, the first condition may be that the first data corresponds to the transmission object that meets the second condition, the first data includes the initial transmission data, and the first state meets the third condition.

In some implementations, when the terminal device obtains the first data for transmission and the transmission overlaps with the measurement time, if the first data includes the initial transmission data, the first data corresponds to the transmission object that meets the second condition, and the first state meets the third condition, the terminal device may transmit the first data, or may offset the measurement time.

In some implementations, when the terminal device obtains the first data for transmission and the transmission overlaps with the measurement time, if the transmission is an initial transmission, the transmission object corresponding to the first data is the transmission object to which the measurement time offset is applicable, and the first state meets the third condition, the terminal device offsets the measurement time.

In some implementations, when the terminal device obtains the first data for transmission and the transmission overlaps with the measurement time, if the transmission is an initial transmission, the transmission object corresponding to the first data is the transmission object for which data transmission is performable within the measurement time, and the first state meets the third condition, the terminal device may transmit the first data within the measurement time.

In some implementations, when the terminal device chooses to offset the measurement time, the terminal device may notify the network device to offset the start time of the measurement time. Optionally, the offset duration may be the offset duration configured by the network device, or may be the offset duration determined by the terminal device.

It may be understood that, after the terminal device notifies the network device to offset the start time of the measurement time, the terminal device does not need to perform measurement at an original start time of the measurement time, so that the first data can be transmitted in a timely manner.

Optionally, in some implementations, the first condition may be that the first data corresponds to the transmission object that meets the second condition, the first data includes the retransmission data, and the first state meets the third condition.

In some implementations, when the terminal device obtains the first data for transmission and the transmission overlaps with the measurement time, if the first data includes the retransmission data, the first data corresponds to the transmission object that meets the second condition, and the first state meets the third condition, the terminal device may transmit the first data, or may offset the measurement time.

In some implementations, when the terminal device obtains the first data for transmission and the transmission overlaps with the measurement time, if the transmission is a retransmission, the transmission object corresponding to the first data is the transmission object to which the measurement time offset is applicable, and the first state meets the third condition, the terminal device offsets the measurement time.

In some implementations, when the terminal device obtains the first data for transmission and the transmission overlaps with the measurement time, if the transmission is a retransmission, the transmission object corresponding to the first data is the transmission object for which data transmission is performable within the measurement time, and the first state meets the third condition, the terminal device may transmit the first data within the measurement time.

In some implementations, when the terminal device chooses to offset the measurement time, the terminal device may notify the network device to offset the start time of the measurement time. Optionally, the offset duration may be the offset duration configured by the network device, or may be the offset duration determined by the terminal device.

It may be understood that, after the terminal device notifies the network device to offset the start time of the measurement time, the terminal device does not need to perform measurement at an original start time of the measurement time, so that the first data can be transmitted in a timely manner.

Optionally, in some implementations, the first condition may be that the first data corresponds to the transmission object that meets the second condition, the first data includes the delay-sensitive data, and the first state meets the third condition.

In some implementations, when the terminal device obtains the first data for transmission and the transmission overlaps with the measurement time, if the first data includes the delay-sensitive data, the first data corresponds to the transmission object that meets the second condition, and the first state meets the third condition, the terminal device may transmit the first data, or may offset the measurement time.

In some implementations, when the terminal device obtains the first data for transmission and the transmission overlaps with the measurement time, if the first data includes the delay-sensitive data, the transmission object corresponding to the first data is the transmission object to which the measurement time offset is applicable, and the first state meets the third condition, the terminal device offsets the measurement time.

In some implementations, when the terminal device obtains the first data for transmission and the transmission overlaps with the measurement time, if the first data includes the delay-sensitive data, the transmission object corresponding to the first data is the transmission object for which data transmission is performable within the measurement time, and the first state meets the third condition, the terminal device may transmit the first data within the measurement time.

In some implementations, when the terminal device chooses to offset the measurement time, the terminal device may notify the network device to offset the start time of the measurement time. Optionally, the offset duration may be the offset duration configured by the network device, or may be the offset duration determined by the terminal device.

It may be understood that, after the terminal device notifies the network device to offset the start time of the measurement time, the terminal device does not need to perform measurement at an original start time of the measurement time, so that the first data can be transmitted in a timely manner.

In some embodiments, when the terminal device needs to transmit the first data and the transmission overlaps with the measurement time, if the first condition provided in Embodiment 1 to Embodiment 7 is not met, the terminal device may not transmit the first data within the measurement time, or may not offset the measurement time. In this case, the terminal device may perform a measurement operation.

Optionally, the measurement operation includes an RRM measurement.

In the data transmission method provided in this embodiment of this application, when the terminal device has to-be-transmitted first data and a transmission time of the first data overlaps with the measurement time, based on the type of the first data, the transmission object corresponding to the first data, the link state, and/or the mobility state of the terminal device, the terminal device may choose to transmit the first data within the measurement time, or choose to transmit the first data at a time at which the start time of the measurement time is offset. Therefore, the terminal device can transmit the first data in a timely manner without waiting for the measurement time to elapse.

Refer to FIG. 9. FIG. 9 is a schematic flowchart 3 of steps of a data transmission method according to an embodiment of this application. In some embodiments of this application, the data transmission method may be applied to a network device, and includes the following steps.

S901: Send first configuration information to a terminal device, where the first configuration information includes information related to a first condition.

In some implementations, the first condition may be related to any one or more of a data type of the first data, a transmission object corresponding to the first data, and a first state.

Optionally, the first state may be related to a link state (an uplink or a downlink) and/or a mobility state of the terminal device.

Optionally, the link state may be related to a network congestion degree, link quality, and the like.

Optionally, in some implementations, the first condition may be related only to the data type of the first data. For example, the first condition may be that the first data includes a specific type of data.

Optionally, the specific type of data may be one or more of retransmission data, initial transmission data, and delay-sensitive data.

Optionally, in some implementations, the first condition may be related only to a transmission object corresponding to the first data. For example, the first condition may be that the transmission object corresponding to the first data is a transmission object to which a measurement time offset is applicable.

Optionally, in some implementations, the first condition may be related only to the first state.

Optionally, in some implementations, the first condition may be simultaneously related to both the data type of the first data and the transmission object corresponding to the first data.

Optionally, in some implementations, the first condition may be simultaneously related to both the data type of the first data and the first state.

Optionally, in some implementations, the first condition may be simultaneously related to both the transmission object corresponding to the first data and the first state.

Optionally, in some implementations, the first condition may be simultaneously related to the data type of the first data, the transmission object corresponding to the first data, and the first state.

In some implementations, the first configuration information includes indication information, and the indication information indicates one or more of a data type, a transmission object, or a first state to which the measurement time offset is applicable or for which data transmission is performable within the measurement time. The indication information determines one or more of a data type, a transmission object, or the first state to which the measurement time offset is applicable or for which data transmission is performable within the measurement time.

In some implementations, the indication information includes first indication information, and the first indication information indicates the data type to which the measurement time offset is applicable, or the data type for which data transmission is performable within the measurement time.

Optionally, in some implementations, the first indication information includes a bitmap, the bitmap includes a plurality of bits, and each bit is mapped to a different data type. When a value of a bit is a first value, it indicates that the measurement time offset is applicable to a corresponding data type or that data transmission is performable within the measurement time. When the value of the bit is a second value, it indicates that the measurement time offset is not applicable to the corresponding data type or that data transmission may not be performable within the measurement time.

For example, it is assumed that a first bit in the field corresponds to initial transmission data, a second bit corresponds to retransmission data, and a third bit corresponds to delay-sensitive data. When the bitmap is "100", the indication information may indicate that the measurement time offset is applicable to the initial transmission data, or that data transmission is performable within the measurement time. When the bitmap is "010", the indication information may indicate that the measurement time offset is applicable to the retransmission data, or that data transmission is performable within the measurement time. When the bitmap is "001", the indication information may indicate that the measurement time offset is applicable to the delay-sensitive data, or that data transmission is performable within the measurement time.

Optionally, in some implementations, the first indication information includes the data type to which the measurement time offset is applicable or for which data transmission is performable within the measurement time, and the data type may be indicated with a type identifier.

For example, when the indication information includes a type identifier of the initial transmission data, the indication information may indicate that the measurement time offset is applicable to the initial transmission data, or that data transmission is performable within the measurement time. When the indication information includes a type identifier of the retransmission data, the indication information may indicate that the measurement time offset is applicable to the retransmission data, or that data transmission is performable within a measurement time. When the indication information includes a type identifier of the delay-sensitive data, the indication information may indicate that the measurement time offset is applicable to the delay-sensitive data, or that data transmission is performable within the measurement time.

For example, the first indication information directly indicates the data type to which the measurement time offset is applicable or for which data transmission is performable within the measurement time.

In some implementations, the indication information includes first information, and the first information indicates the transmission object to which the measurement time offset is applicable.

Optionally, in some implementations, the first information includes a bitmap. Each bit in the bitmap is mapped to a different transmission object. When a value of the bit is a first value, it indicates that the measurement time offset is applicable to a corresponding transmission object. When the value of the bit is a second value, it indicates that the measurement time offset is not applicable to the corresponding transmission object.

Optionally, in some implementations, the first information includes an identifier of the transmission object to which the measurement time offset is applicable. For example, if the first information includes the identifier of the first transmission object, the first information may indicate that the first transmission object is the transmission object to which the measurement time offset is applicable.

Optionally, in some implementations, the first information is carried in configuration information of the transmission object. For example, the first information may be a field in the configuration information of the transmission object. When the field is a first preset value, it indicates that the measurement time offset is applicable to the transmission object. When the field is a second preset value or is empty, it indicates that the measurement time offset is not applicable to the transmission object.

In some implementations, the indication information includes second indication information, and the second indication information indicates the transmission object for which data transmission is performable within the measurement time.

Optionally, in some implementations, the second indication information includes a bitmap, and each bit in the bitmap is mapped to a different transmission object. When a value of a bit is a first value, it indicates that a corresponding transmission object can perform data transmission within the measurement time. When the value of the bit is a second value, it indicates that the corresponding transmission object can not perform data transmission within the measurement time.

Optionally, in some implementations, the second indication information includes an identifier of the transmission object for which data transmission is performable within the measurement time. For example, if the second indication information includes the identifier of the first transmission object, the second indication information may indicate that the first transmission object is the transmission object for which data transmission is performable within the measurement time.

Optionally, in some implementations, the second indication information is carried in the configuration information of the transmission object. For example, the second indication information may be a field in the configuration information of the transmission object. When the field is a first preset value, it indicates that the transmission object may perform data transmission within the measurement time. When the field is a second preset value or is empty, it indicates that the transmission object may not perform data transmission within the measurement time.

In some implementations, the indication information includes third indication information, and the third indication information indicates the first state to which the measurement time offset is applicable or for which data transmission is performable within the measurement time; and a third condition that the first state needs to meet.

Optionally, the first state may be related to a link state (an uplink or a downlink) and/or a mobility state of the terminal device.

Optionally, the link state may be related to a network congestion degree, link quality, and the like.

Optionally, the first state includes at least one of the following: mobility of the terminal device, a congestion status, and a link state.

Optionally, the third condition that the first state needs to meet includes:

The mobility of the terminal device is that a mobility speed of the terminal device is less than a preset speed threshold; and
the mobility of the terminal device may be the low mobility, the normal mobility, the medium mobility, the high mobility, the static state, or the non-cell-edge state.

The congestion status is congestion or non-congestion.

The link state is that link quality (any one of the RSRP, the RSRQ, the RSSI, or the SINR) is less than a first quality threshold, or the link state may be that link quality is greater than a first quality threshold or less than a second quality threshold, or the link state may be that link quality is greater than a second quality threshold.

In some implementations, the third indication information indicates one or more of the information that may be involved in the third condition: a mobility speed threshold of the terminal device, a cell quality change threshold, a threshold for the number of cell reselections, a cell quality threshold, a network congestion threshold, and a link quality threshold.

For example, if the third indication information indicates the mobility speed threshold of the terminal device, when the terminal device has to-be-transmitted first data, the transmission overlaps with the measurement time, and a mobility speed of the terminal device is less than the speed threshold, the terminal device may transmit the first data, or may offset the measurement time.

In some implementations, the indication information includes fourth indication information, and the fourth indication information is used to determine whether to perform the measurement time offset or data transmission within the measurement time based on any one or more of first indication information, first information, second indication information, and third indication information (perform data transmission when the first data overlaps with the measurement time).

The fourth indication information, and the first indication information, the first information, the second indication information, and the third indication information are delivered by using two pieces of signaling. For example, the first indication information, the first information, the second indication information, or the third indication information is configured by using first signaling, and the first signaling is deactivated by using second signaling.

For example, when the data type to which the measurement time offset is applicable being a specific type, or the data type for which data transmission is performable within the measurement time being a specific type is configured in the first indication information, the fourth indication information may indicate that, if the specific type of data needs to be transmitted within a time period, the measurement time may be offset, or the data transmission may be performed within the measurement time.

For example, when retransmission data to which the measurement time offset is applicable or for which data transmission is performable within the measurement time is configured in the first indication information, the terminal device does not directly perform the foregoing operation. Instead, when the terminal device receives the fourth indication information (activation configuration), and there is to-be-transmitted retransmission data, the terminal device may offset the measurement time, or may perform data transmission within the measurement time.

For example, when the transmission object for which data transmission is performable within the measurement time is configured in the second indication information, the fourth indication information may indicate that, if there is to-be-transmitted data from the transmission object within the time period, the data may be transmitted within the measurement time.

For example, when the first transmission object for which data transmission is performable within the measurement time is configured in the second indication information, the terminal device does not directly perform the foregoing operation. Instead, when the terminal device receives the fourth indication information (activation configuration), and there is data from the first transmission object, the terminal device may transmit the data within the measurement time.

For example, when the first state to which the measurement time offset is applicable or for which data transmission is performable within the measurement time, and the third condition that the first state needs to meet are configured in the third indication information, the fourth indication information may indicate that, if the first state meets the third condition within the time period, the measurement time may be offset, or data transmission may be performed within the measurement time.

Optionally, a type of the indication information is a holding type or a release type.

It should be noted that the indication information may include any one or more of the first indication information, the first information, the second indication information, and the third indication information. For example, the indication information may simultaneously include the first indication information, the second indication information, and the third indication information. Details are not described again in this embodiment of this application.

In the data transmission method provided in this embodiment of this application, the network device sends the first configuration information to the terminal device, so that the terminal device may choose, based on the first configuration information, to transmit the first data within the measurement time, or may choose to transmit the first data at the time at which the start time of the measurement time is offset. Therefore, the terminal device can transmit the first data in a timely manner without waiting for the measurement time to elapse.

The data transmission method in embodiments of this application is described above. An apparatus for performing the data transmission method provided in embodiments of this application is described below. A person skilled in the art may understand that the method and the apparatus may be combined and mutual reference may be made, and that a related apparatus provided in an embodiment of this application may perform the steps in the data transmission method.

It should be noted that all module names involved in embodiments of this application may be defined as other names, provided that functions of the modules can be implemented. The module names are not specifically limited.

The data transmission method provided in embodiments of this application may be applied to an electronic device having a communication function. The electronic device includes a terminal device or a network device. For a specific device form and the like of the terminal device or the network device, reference may be made to the foregoing related descriptions. Details are not described herein again.

Refer to FIG. 10. FIG. 10 is a diagram of a hardware structure of an electronic device according to an embodiment of this application. An embodiment of this application provides an electronic device. The electronic device 100 includes: a processor 1001 and a memory 1002. The memory 1002 stores computer-executable instructions. The processor 1001 executes the computer-executable instructions stored in the memory 1002, to enable the electronic device to perform the data transmission method.

An embodiment of this application provides a chip. The chip includes a processor, and the processor is configured to invoke a computer program in a memory to execute the technical solutions in the foregoing embodiments. An implementation principle and technical effects of the chip are similar to those in the foregoing related embodiments. Details are not described herein again.

An embodiment of this application further provides a computer-readable storage medium. The computer-readable storage medium has a computer program stored therein. The computer program is executed by a processor to implement the data transmission method. The data transmission method described in the foregoing embodiments may be completely or partially implemented by using software, hardware, firmware, or any combination thereof. If implemented in software, the functions may be stored in a computer-readable medium or transmitted on a computer-readable medium as one or more instructions or code. The computer-readable medium may include a computer storage medium and a communication medium, and may also include any medium that can transfer a computer program from one place to another. The storage medium may be any target medium accessible to a computer.

In a possible implementation, the computer-readable medium may include a RAM, a ROM, a compact disc read-only memory (compact disc read-only memory, CD-ROM) or another optical disk memory, a magnetic disk memory or another magnetic storage device, or any other medium that is to carry or store required program code in a form of an instruction or a data structure, and is accessible to a computer. Furthermore, any connection is appropriately referred to as a computer-readable medium. For example, if a coaxial cable, an optical fiber cable, a twisted pair, a digital subscriber line (Digital Subscriber Line, DSL), or a wireless technology (like infrared, radio, and a microwave) is used to transmit software from a website, a server, or another remote source, the coaxial cable, the optical fiber cable, the twisted pair, the DSL, or the wireless technology such as infrared, radio, and a microwave is included in a definition of the medium. A disk and an optical disc used in this specification include an optical disc, a laser disk, a digital versatile disc (digital versatile disc, DVD), a floppy disk, and a blue-ray disc, where the disk generally reproduces data by magnetic means, while the optical disc optically reproduces data by using a laser. Combinations of the foregoing should also be included within the scope of computer-readable media.

An embodiment of this application provides a computer program product, where the computer program product includes a computer program, and when the computer program is run, a computer is enabled to perform the data transmission method.

The objectives, technical solutions, and beneficial effects of the present invention are further described in detail in the foregoing specific implementations. It should be understood that the foregoing descriptions are merely specific implementations of the present invention, but are not intended to limit the protection scope of the present invention. Any modification, equivalent replacement, improvement, or the like made based on the technical solutions of the present invention shall fall within the protection scope of the present invention.

## Claims

1. A data transmission method, comprising:
sending first configuration information to a terminal device, wherein the first configuration information comprises information related to a first condition, and/or the first configuration information comprises indication information;
the first condition is related to any one or more of a data type of first data, a transmission object corresponding to the first data, and a first state; and the first state is related to a link state and/or a mobility state of the terminal device; and
the indication information indicates one or more of a data type, a transmission object, or a first state to which the measurement time offset is applicable or for which data transmission is performable within the measurement time.

2. The method according to claim 1, wherein the indication information comprises first information, and the first information indicates the transmission object to which the measurement time offset is applicable.

3. The method according to claim 1 or 2, wherein the transmission object comprises any one of a transmission channel, a data set, a data bearer, a data stream, and a transmission resource; the transmission channel comprises a logical channel or a logical channel group; and the transmission resource comprises an uplink resource or a downlink resource.

4. The method according to claim 3, wherein the first information comprises a bitmap; and
the bitmap comprises at least one bit, and each bit is mapped to a different transmission object; and when a value of the bit is a first value, it indicates that the measurement time offset is applicable to a corresponding transmission object; and when the value of the bit is a second value, it indicates that the measurement time offset is not applicable to the corresponding transmission object; and
the first information comprises an identifier of the transmission object to which the measurement time offset is applicable; or
the first information is carried in configuration information corresponding to the transmission object.

5. The method according to claim 4, wherein the transmission object comprises the transmission resource, and the first information is carried in resource configuration information corresponding to the transmission resource; and
the first information comprises a first field; and when the first field is a first preset value, it indicates that the measurement time offset is applicable to the transmission resource; and when the first field is a second preset value or is empty, it indicates that the measurement time offset is not applicable to the transmission resource.

6. The method according to claim 2, wherein the first information further indicates an offset duration of the measurement time offset; or
the method further comprises:
sending second information to the terminal device, wherein the second information comprises the offset duration of the measurement time offset.

7. The method according to claim 6, wherein the method further comprises:
receiving third information from the terminal device, wherein the third information indicates a start time at which a first measurement time is offset; and
offsetting the start time of the first measurement time based on the offset duration.

8. The method according to claim 2, wherein the method further comprises:
receiving fourth information from the terminal device, wherein the fourth information comprises an offset duration of a first measurement time; and
offsetting a start time of the first measurement time based on the offset duration.

9. The method according to claim 2, wherein the data type of the first data comprises any one of retransmission data, initial transmission data, and delay-sensitive data; and
the indication information comprises first indication information, and the first indication information indicates the data type to which the measurement time offset is applicable, or the data type for which data transmission is performable within the measurement time.

10. The method according to claim 9, wherein the first indication information comprises a bitmap, the bitmap comprises a plurality of bits, and each bit is mapped to a different data type; and when a value of a bit is a first value, it indicates that the measurement time offset is applicable to a corresponding data type or that data transmission is performable within the measurement time; and when the value of the bit is a second value, it indicates that the measurement time offset is not applicable to the corresponding data type or that data transmission is not performable within the measurement time; or
the first indication information comprises an identifier of the data type to which the measurement time offset is applicable or for which data transmission is performable within the measurement time.

11. The method according to claim 2, wherein the indication information comprises second indication information, and the second indication information indicates the transmission object for which data transmission is performable within the measurement time.

12. The method according to claim 11, wherein the second indication information comprises a bitmap, and each bit in the bitmap is mapped to a different transmission object; and when a value of a bit is a first value, it indicates that a corresponding transmission object is capable of performing data transmission within the measurement time; and when the value of the bit is a second value, it indicates that the corresponding transmission object is not capable of performing data transmission within the measurement time;
the second indication information comprises an identifier of the transmission object for which data transmission is performable within the measurement time; or
the second indication information is carried in configuration information of the transmission object; the second indication information comprises a second field; and when the second field is a first preset value, it indicates that the transmission object is capable of performing data transmission within the measurement time; and when the second field is a second preset value or is empty, it indicates that the transmission object is not capable of performing data transmission within the measurement time.

13. The method according to claim 2, wherein the indication information comprises third indication information, and the third indication information indicates the first state to which the measurement time offset is applicable or for which data transmission is performable within the measurement time; and the first state comprises at least one of the following: mobility of the terminal device, a congestion status, and the link state.

14. The method according to claim 13, wherein
the first state needs to meet a third condition; and
the third condition comprises at least one of the following: a mobility speed of the terminal device is less than a preset speed threshold, the terminal device is in a static state, the terminal device is not in a cell-edge state, the congestion status is congestion, link quality is less than a first quality threshold, link quality is greater than a first quality threshold or less than a second quality threshold, or link quality is greater than a second quality threshold.

15. The method according to claim 2, wherein the indication information comprises fourth indication information, and the fourth indication information is used to determine whether to perform the measurement time offset or data transmission within the measurement time based on any one or more of first indication information, the first information, second indication information, and third indication information.

16. The method according to any one of claims 2 to 15, wherein
the measurement time comprises a measurement time window of a measurement gap or a synchronization signal/physical broadcast channel block measurement timing configuration window.

17. A data transmission method, comprising: determining whether a first condition is met; and
when the first condition is met, transmitting the first data, or offsetting a measurement time.

18. The method according to claim 17, wherein the transmission object comprises any one of a transmission channel, a data set, a data bearer, a data stream, and a transmission resource; the transmission channel comprises a logical channel or a logical channel group; and the transmission resource comprises an uplink resource or a downlink resource.

19. The method according to claim 17, wherein the method further comprises:
receiving first configuration information from a network device, wherein the first configuration information comprises information related to the first condition; and the first condition is related to any one or more of a data type of the first data, a transmission object corresponding to the first data, and a first state; and the first state is related to a link state and/or a mobility state of a terminal device; or
the first configuration information comprises indication information, and the indication information indicates one or more of a data type, a transmission object, or a first state to which a measurement time offset is applicable or for which data transmission is performable within the measurement time.

20. The method according to claim 19, wherein the indication information comprises first information, and the first information indicates the transmission object to which the measurement time offset is applicable.

21. The method according to claim 19, wherein the indication information comprises first indication information, and the first indication information indicates the data type to which the measurement time offset is applicable, or the data type for which data transmission is performable within the measurement time.

22. The method according to claim 19, wherein the indication information comprises second indication information, and the second indication information indicates the transmission object for which data transmission is performable within the measurement time.

23. The method according to claim 19, wherein the indication information comprises third indication information, and the third indication information indicates the first state to which the measurement time offset is applicable or for which data transmission is performable within the measurement time; and the first state comprises at least one of the following: mobility of the terminal device, a congestion status, and the link state.

24. The method according to claim 19, wherein the indication information comprises fourth indication information, and the fourth indication information is used to determine whether to perform the measurement time offset or data transmission within the measurement time based on any one or more of first indication information, first information, second indication information, and third indication information.

25. The method according to any one of claims 17 to 24, wherein the determining whether the first condition is met comprises:
when the first data exists and a transmission time of the first data overlaps with the measurement time, determining whether the first condition is met.

26. The method according to claim 25, wherein the first condition comprises one or more of the following:
the first data comprises one or more of a specific type of data, the first data corresponds to a transmission object that satisfies a second condition, or the first state meets a third condition.

27. The method according to claim 26, wherein the specific type of data comprises any one of retransmission data, initial transmission data, and delay-sensitive data.

28. The method according to claim 26, wherein
the second condition is that the transmission object to which the measurement time offset is applicable or the transmission object for which data transmission is performable within the measurement time is comprised.

29. The method according to claim 23, wherein
the first state needs to meet the third condition; and the third condition comprises at least one of the following: a mobility speed of the terminal device is less than a preset speed threshold, the terminal device is in a static state, the terminal device is not in a cell-edge state, the congestion status is congestion, link quality is less than a first quality threshold, link quality is greater than a first quality threshold or less than a second quality threshold, or link quality is greater than a second quality threshold.

30. The method according to claim 17, wherein the method further comprises:
receiving second information from a network device, wherein the second information comprises an offset duration of the measurement time; and
sending third information to the network device, wherein the third information indicates the network device to offset a start time of the measurement time based on the offset duration.

31. The method according to claim 17, wherein the method further comprises:
sending fourth information to a network device, wherein the fourth information comprises an offset duration of the measurement time, and the fourth information indicates the network device to offset a start time of the measurement time based on the offset duration.

32. The method according to any one of claims 17 to 31, wherein the first data comprises extended reality XR service data.

33. The method according to claim 19, wherein a type of the indication information comprises a holding type and a release type; and
when the type of the indication information is the holding type and the indication information is not reconfigured in a reconfiguration process, the indication information remains valid; and
when the type of the indication information is the release type and the indication information is not reconfigured in the reconfiguration process, the indication information is released.

34. A network device, comprising a processor and a memory, wherein
the memory stores computer-executable instructions; and
the processor executes the computer-executable instructions stored in the memory, to enable the network device to perform the method according to any one of claims 1 to 16.

35. A terminal device, comprising a processor and a memory, wherein
the memory stores computer-executable instructions; and
the processor executes the computer-executable instructions stored in the memory, to enable the terminal device to perform the method according to any one of claims 17 to 33.

36. A computer-readable storage medium, wherein the computer-readable storage medium stores a computer program, and the computer program, when executed by a processor, implements the method according to any one of claims 1 to 16, or implements the method according to any one of claims 17 to 33.

37. A computer program product, comprising a computer program, and when the computer program is run, a computer is enabled to perform the method according to any one of claims 1 to 16, or implement the method according to any one of claims 17 to 33.
